# EUROPÄISCHE PATENTSCHRIFT

(11) **EP 4 105 287 B1**
(45) Veröffentlichungstag und Bekanntmachung des Hinweises auf die Patenterteilung: **24.07.2024**
(21) Anmeldenummer: 22170695.5
(22) Anmeldetag: 29.04.2022
(51) Int. Cl.: C09D 13/00

(54) **PASTENZUSAMMENSETZUNGEN**
PASTE COMPOSITIONS
COMPOSITIONS PÉTEUSES

(30) Priorität: 26.05.2021 EP 21175900
(43) Veröffentlichungstag der Anmeldung: 21.12.2022
(73) Patentinhaber: Cliq Swisstech (The Netherlands) B.V., 9747 AC Groningen (NL)
(72) Erfinder: SLAGT, Vincent Friso, 9401 PV Assen (NL); VAN PEY, Detlef, 51377 Leverkusen (DE); STAPEL, Björn, 50321 Brühl (DE)
(74) Vertreter: Fabry, Bernd

(56) Entgegenhaltungen:
- WO-A1-2018/184961
- US-A1- 2017 253 838

## Beschreibung

### GEBIET DER ERFINDUNG

Die Erfindung befindet sich auf dem Gebiet der Lacke und Farben und betrifft im Wesentlichen wasser- und lösemittelfreie Pigmentpasten-Formulierungen, die Farbpigmente zusammen mit neuen Viskositätsregulatoren enthalten.

### TECHNOLOGISCHER HINTERGRUND

Sowohl unter professionellen Malern und Lackierern, als auch Heimwerkern, ist es beliebt, einen gewünschten Farbton durch das Vermischen von Pigmentpasten mit Basisfarben und -lacken zeitsparend und sehr exakt einzustellen. Insbesondere in Baumärkten werden dafür Dosiermaschinen eingesetzt, die eine große Zahl von Farbpasten enthalten, um dann basierend auf einer Rezepturdatenbank den gewünschten Farbton durch Auswahl der entsprechenden Pigmentpasten nach Art und Menge sowie Basisfarben und -lacken in kurzer Zeit jederzeit reproduzierbar herstellen.

Bei diesen sogenannten Farbtonmischsystemen sind zwei Parameter kritisch: zum einen hängt die Genauigkeit der Herstellung eines Farbtons davon ab, wie viele Pigmentpasten mit unterschiedlichen Pigmentarten (Colorindizes) und -konzentrationen zur Verfügung stehen. Je mehr unterschiedliche Farbpasten vorhanden sind, desto größer ist der darstellbare Farbraum, umso mehr Platz wird jedoch dafür auf der Anlage benötigt. Zum anderen werden die Pigmentpasten nicht alle gleich häufig und in gleichen Mengen benötigt, was dazu führt, dass manche Farben mitunter monatelang in ihren Behältern verbleiben, was eine Verkeimung und Austrocknung konventioneller Pigmentpasten begünstigt.

Um die Pastenmenge auf den Mischmaschinen gering zu halten, setzt man hochkonzentrierte Pigmentpasten ein, die möglichst wenig Wasser oder Lösungsmittel enthalten und damit weniger Lagerplatz benötigen. Mit abnehmender Menge an Solventien steigt jedoch die Viskosität, was die Dosierung erschwert oder mitunter unmöglich macht.

Das Problem der Verkeimung kann man durch Verzicht auf Wasser als Lösungsmittel zwar lösen, doch führt dies dazu, dass man entweder auf lösungsmittelhaltige Systeme ausweichen muss - was wieder mit mehr Platzbedarf verbunden ist und aus ökotoxikologischen Gründen nicht wünschenswert ist - oder man setzt den Pigmentpasten Biozide zu. Biozid-haltige Systeme werden von Verbrauchern jedoch zunehmend kritisch gesehen und können insbesondere nicht mit dem Umweltsiegel "Blauer Engel" ausgezeichnet werden.

Der Austrocknung der Pigmentpasten begegnet man bei wässrigen Systemen mit der Verwendung von Feuchthaltemitteln, sogenannter "Humectants", bei lösemittelhaltigen Pasten mit Lösemitteln einer niedrigeren Verdunstungszahl.

### RELEVANTER STAND DER TECHNIK

Aus der WO 2018 184961 A1 (BYK) sind Monoepoxid-Monoamin-Addukte als Dispergatoren und Netzmittel für Farbpigmente bekannt.

Auf Polyurethanen basierende Copolymere werden in der WO 2015 090811 A1 (BASF) für den gleichen Zweck vorgeschlagen.

Gegenstand der WO 2018 157965 A1 (THOR) ist der Einsatz von 5-Chlor-2-Methylisothiazolin als Biozid zur Konservierung von technischen Produkten einschließlich von Pigmentpasten.

WO 2018 184961 A1 (BYK) betrifft Epoxid-Amin-Addukte, erhältlich durch Umsetzung von einem oder mehreren primären Aminen (A) der allgemeinen Formel (I) Q-NH2 (I) mit einem oder mehreren Monoepoxiden (B) der allgemeinen Formel (II) 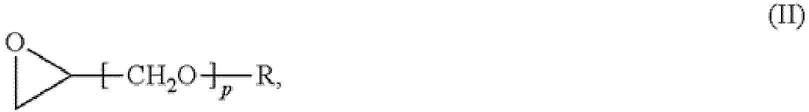 und gegebenenfalls anschließende Versalzung und/oder Quaternisierung

US 2017253838 A1 (SCHEIBEL) bezieht sich auf Zusammensetzungen, die ein anionisches Tensid, ausgewählt aus der Gruppe bestehend aus Alkylsulfaten, alkoxylierten Alkylsulfaten und Mischungen davon, und ein Lösungsmittel, insbesondere ein Lösungsmittel, das ein oder mehrere Diole umfasst, enthalten.

### AUFGABE DER ERFINDUNG

Die Aufgabe der vorliegenden Erfindung hat daher darin bestanden, Pigmentpasten, vorzugsweise sowohl wasser- als lösemittelfreie (sogenannte "100-prozentige") Systeme zur Verfügung zu stellen, die trotz Abwesenheit von Solventien eine hinreichend niedrige Viskosität aufweisen, so dass sie mühelos fließ- und pumpfähig sind. Die Zubereitungen sollten zudem ausschließlich konstitutionelle Bestandteile enthalten, die den Anforderungen des RAL UZ 102 "Blauer Engel" an Tönprodukte genügen. Hierzu gehören beispielsweise die Freiheit von Bioziden, Weichmachern, SVHC- Stoffen und wassergefährdende Substanzen.

### BESCHREIBUNG DER ERFINDUNG

Gegenstand der Erfindung sind Pastenzusammensetzungen, enthaltend und/oder bestehend aus
(a) mindestens einem Farbpigment und/oder einem Füllstoff,
(b) mindestens einer alkoxylierten Verbindung, nämlich
   (b1) einer alkoxylierten Carbonsäure und/oder
   (b2) einem alkoxylierten Alkohol und/oder
   (b3) einem Poloxamer,
   und gegebenenfalls
(c) mindestens einem Dispergator.

Überraschenderweise wurde gefunden, dass alkoxylierte Verbindungen, speziell bestimmte Polyglykole einschließlich den EO-PO-Blockcopolymeren, wie auch alkoxylierte Carbonsäuren, insbesondere Ölsäurealkoxylate, die Herstellung von fließ- und pumpfähigen Pigment- und Füllstoffpasten mit bis zu 80 Gew.-% Feststoffanteil erlaubt. Fließ- und pumpfähig bedeutet hierbei, dass die Pasten eine Viskosität (Platte/Platte, 20 °C) von weniger als 1.000 mPas bei einem Schergefälle von 500 1/s sowie weniger als 20000 mPas bei 1 1/s aufweisen. Die Pasten gelten dabei als wasserfrei, sie enthalten allenfalls bis zu 2Gew.-% Wasser, das über die Pigmente oder ggf. die Restfeuchte der Alkoxylate und/oder Dispergatoren eingetragen wird. Sie sind ferner lösemittel- und weichmacherfrei. Da sie in die Anforderungen des RAL UZ 102 an konstitutionelle Bestandteile für Tönprodukte erfüllen, sind die Pigmentpräparationen in hohem Maße geeignet, Basisfarben und -lacke mit dem Umweltsiegel "Blauer Engel" zu tönen.

### Pastenzusammensetzungen

Die Pasten können Pigmente, speziell Farbpigmente, oder auch Füllstoffe enthalten, wobei diese anorganischer oder organischer Natur sein können; ihre Auswahl ist weitgehend unkritisch und richtet sich nur nach dem Einsatzzweck. Sie können sowohl für die spätere Verwendung in Farben wie in Lacken gedacht sein. Beispiele für organische Pigmente sind Arylidgelb (C.I.11741), Phthalocyaningrün (C.I.74260), Phthalocyaninblau (C.I.74160), Diketopyrrolopyrrol (C.I.56110) und Carbazolviolett (C.I.51319). Die bevorzugten anorganischen Pigmente sind Titandioxid (C.I.77891), Eisenoxidrot (C.I.77491), Eisenoxidgelb (C.I.77492) und Bismutvanadat (C.I.771740). Daneben können auch Pigmentruß (C.I.77266) oder weitere farbige Metallmischoxide - soweit diese toxikologisch unbedenklich sind - eingesetzt werden. Als Füllstoffe zur Einstellung von anwendungstechnischen Eigenschaften wie Dichte und Viskosität kommen beispielsweise Calciumcarbonat (C.I.77220), Bariumsulfat (C.I.77120), Talkum (C.I. 77718) oder auch Kaolin (C.I.77004) zum Einsatz.

### Alkoxylierte Carbonsäuren

Bei den alkoxylierten Carbonsäuren handelt es sich um bekannte Produkte, die nach den üblichen Methoden der präparativen organischen Chemie hergestellt werden können. Dazu legt man beispielsweise die Carbonsäure vor und setzt diese bei Drücken im Bereich von beispielsweise 2 bis 10 bar und Temperaturen von beispielsweise 50 bis 150 °C mit Ethylenoxid oder Propylenoxid um. Es können auch Mischungen von Ethylen- und Propylenoxid eingesetzt werden; dies führt dann zu einer statistischen Verteilung der Ethylen- und Propylenoxideinheiten über die Polyetherkette (Random-Verteilung). Werden Ethylen- und Propylenoxid nacheinander oder abwechselnd aufgegeben, ergibt sich in der Polyetherkette eine Blockverteilung.

Geeignete, alkoxylierte Carbonsäuren folgen typischerweise der Formel (I)

R¹CO(AO)ₙOH (I)

in der
- R¹: für ein lineares oder verzweigtes, gegebenenfalls hydroxysubstituiertes Acylradikal mit 16 bis 22 Kohlenstoffatomen, das bis zu 3 Doppelbindungen besitzen kann,
- AO: für eine Ethylenglykol- oder Propylenglykol-Einheit oder eine Mischung von Ethylenglykol- und Propylenglykol-Einheiten in Block- oder Random-Abfolge, und
- n: für ganze Zahlen von 1 bis 25
steht.

Zu den bevorzugten Carbonsäuren (die auch als Fettsäuren bezeichnet werden), gehören Palmoleinsäure, Ölsäure, Elaidinsäure, Linolsäure, Linolensäure, Gadoleinsäure, Arachidonsäure, Erucasäure sowie Ricinolsäure. Besonders bevorzugt sind Ölsäurealkoxylate.

Die Alkoxylierungsprodukte enthalten typisch 0 bis 10 Propylenoxideinheiten und vorzugsweise 2 bis 15 und insbesondere 3 bis 10 Ethylenoxideinheiten, entweder in Block- oder Randomverteilung. Besonders bevorzugt ist ein Addukt von 1 Mol Propylenoxid und 10 Mol Ethylenoxid an Ölsäure in Random- Verteilung.

Statt durch Umsetzung mit Alkylenoxiden sind die Verbindungen auch durch Veresterung mit den entsprechenden Polyalkylenglykolen erhältlich, die gegebenenfalls auch einseitig, beispielsweise durch Methylgruppen verschlossen sein können.

### Alkoxylierte Alkohole

Bei den Polyalkylenglykolethern handelt es sich um bekannte Produkte, die nach den üblichen Methoden der präparativen organischen Chemie hergestellt werden können. Dazu legt man beispielsweise den Startalkohol vor und setzt diesen bei Drücken im Bereich von beispielsweise 2 bis 10 bar und Temperaturen von beispielsweise 50 bis 150 °C mit Ethylenoxid oder Propylenoxid um. Es können auch Mischungen von Ethylen- und Propylenoxid eingesetzt werden; dies führt dann zu einer statistischen Verteilung der Ethylen- und Propylenoxideinheiten über die Polyetherkette (Random-Verteilung). Werden Ethylen- und Propylenoxid nacheinander oder abwechselnd aufgegeben, ergibt sich in der Polyetherkette eine Blockverteilung.

Geeignete, alkoxylierte Alkohole folgen typischerweise der Formel (II)

R²(AO)ₘOH (II)

in der
- R²: für ein lineares oder verzweigtes Kohlenwasserstoffradikal mit 1 bis 22 Kohlenstoffatomen, das bis zu 3 Doppelbindungen besitzen kann,
- AO: für eine Ethylenglykol- oder Propylenglykol-Einheit oder eine Mischung von Ethylenglykol- und Propylenglykol-Einheiten in Block- oder Random-Abfolge, und
- m: für ganze Zahlen von 1 bis 30
steht.

Zu den bevorzugten Startalkoholen (entsprechend einer Formel R²OH) gehören insbesondere native oder synthetische Fettalkohole mit 6 bis 22 Kohlenstoffatomen aber auch niedermolekulare Alkohole mit 1 bis 5 Kohlenstoffatomen. Die Alkohole können auch ein- oder mehrfach ungesättigt sowie verzweigt sein. Es können auch bereits EO oder PO- Addukte aus Alkoholen als Startmaterialien verwendet werden, bevorzugt sind hier Butyldiglykol sowie Butyltriglykol zu nennen.

Besonders bevorzugt sind Alkoxylate von Butanol sowie dessen Addukte Butyldiglykol und Butyltriglykol mit einer mittleren molaren Masse von 900 bis 1200 g/mol und einem Verhältnis EO/PO von 1:1 bis 2:1 als Random- Verteilung. Die statistische Molmassenverteilung sollte möglichst eng sein und wenig niedermolekulare Anteile enthalten.

Ebenso kommen Polyglykolallylalkylether in Frage. Diese Produkte unterscheiden sich von den Polyalkylenglykolen durch eine reaktive Doppelbindung im Molekül. Diese Doppelbindung kann später bei der Anwendung der Tönpasten in einem oxidativ trocknenden Bindemittel mit vernetzen und die Filmhärte des Systems deutlich erhöhen.

### Poloxamere

Ebenfalls geeignet sind Poloxamere. Dabei handelt es sich um Blockcopolymere aus Ethylenoxid und Propylenoxid, die schematisch der Formel (III) folgen 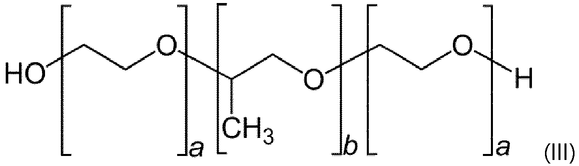 in der a und b für Zahlen von etwa 100 bis etwa 500 stehen.

Es handelt sich bei diesen Polymeren um schaumarme und schaumdämpfende nichtionische Tenside, die zur Dispergierung und Emulgierung in der chemisch-technischen Industrie Anwendung finden. Der Polyethylenoxidteil des Polymers ist dabei wasserlöslich, der Polypropylenoxidteil jedoch nicht, so dass sich die amphiphilen Eigenschaften ergeben. Je nach Ethoxylierungsgrad sind die Poloxamere flüssig (L), pastös (P), fest (F) oder pulverförmig. Poloxamere weisen in der Regel einen zentralen Polypropylenglycol-Teil auf und werden durch eine zwei- oder dreistellige Ziffernfolge charakterisiert. Die Polymere wurden in den 1950er Jahren von BASF entwickelt und werden seitdem unter dem Markennamen Pluronic^{®} vertrieben. Die letzte Ziffer mit dem Faktor 10 multipliziert gibt etwa den relativen Massenanteil der Ethylenoxideinheiten in Prozent an, die voranstehende(n) Ziffer(n) mit dem Faktor 100 multipliziert codieren die relative Molekülmasse des Polypropylenglycol-Blockes. Beispiele für besonders geeignete Poloxamere sind.
- Pluronic PE6400,
- Pluronic 8100,
- Pluronic RPE1740 und
- Pluronic 3110.

Vorzugsweise besitzen die Poloxamere Molekulargewichte im Bereich von etwa 5.000 bis etwa 20.000 und vorzugsweise etwa 7.500 bis etwa 15.000.

### Aminverbindungen als Dispergatoren

Obwohl der Zusatz von alkoxylierten Carbonsäuren, wie auch Polyalkylenglykolen oder Poloxameren, schon alleine die Viskosität auch hochkonzentrierter Pigmentpasten so stark erniedrigt, dass diese auch in Abwesenheit von Wasser oder organischen Solventien fließ- und pumpfähig werden, lässt sich dieser Effekt noch steigern, wenn man spezielle Aminverbindungen als Dispergatoren mitverwendet. Dabei kann das Einsatzverhältnis zwischen Additiv und Co-Additiv im Bereich von 50:50 zu 95:5 und vorzugsweise im Bereich von 80:20 bis 90:10 liegen.

Die Aminverbindungen können aliphatischer, aromatischer oder araliphatischer Natur sein. Der Stickstoff kann dabei auch Teil eines Ringes sein. Die Verbindungen können primäre, sekundäre oder tertiäre Amine darstellen und pro Substituenten am Stickstoff 1 bis 20 Kohlenstoffatome besitzen.

Geeignete Aminverbindungen folgen in einer ersten Ausgestaltung der Formel (IV) 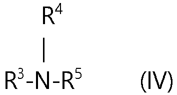 in der
- R³: für -(CHY)ₓ(NH)_{y}(CHY)_{z}A,
- x: und y jeweils für ganze Zahlen von 1 bis 10, vorzugsweise 1 bis 5,
- y: für 0 oder 1,
- Y: für Wasserstoff oder eine Alkylgruppe mit 1 bis 4 Kohlenstoffatomen,
- A: für Wasserstoff, eine Hydroxylgruppe, eine Aminogruppe oder eine (OCH₂CHY)p-Gruppe
- P: für ganze Zahlen von 1 bis 10 und
- R⁴: und R⁵ unabhängig voneinander für Wasserstoff oder R¹
stehen.

Geeignete Beispiele sind insbesondere die Anlagerungsprodukte von 1 bis 25, vorzugsweise 2 bis 5 Mol Ethylenoxid und/oder Propylenoxid (in Random- oder Blockverteilung) an Methylamin, Dimethylamin, Trimethylamin, Ethylamin, Diethylamin, Triethylamin, Propylamin, Dipropylamin, Tripropylamin, Butylamin, Dibutylamin, Tributylamin, Methylethylamin, Methyldiethylamin, Dimethylethylamin, Diethylenamin, Dipropylenamin, Ethanolamin, Diethanolamin, Triethanolamin und deren Mischungen.

Als weitere, hocheffiziente Dispergatoren, die universell für alle Pigment- und Füllstoffklassen eingesetzt werden können, haben sich Block- Copolymere mit einer Kammstruktur erwiesen. Die sogenannten Kammpolymere bestehen aus einer polymeren Hauptkette, an der sich kammförmig andere Mono-, Oligo- oder Polymerketten anschließen. Die Hauptkette besteht in der Regel aus Copolymeren wie Stryrol- Maleinsäureandyhrid, aber auch Acrylsäurecopolymere mit Styrol sowie Ester der Acrylsäure kommen in Betracht. Je nach Anwendung können die Copolymere unterschiedliche Molmassen und Taktizitäten besitzen. Die kammartig an die Hauptkette angeordneten Seitenketten sind insbesondere polymere Sulfonamide, Polyglykolether, N-(3-Aminopropyl)imidazol (API) und 3-Aminopropyldimethylamin (DMAPA),jedoch sind auch weitere Substanzen möglich. Polymere Seitenketten fördern die sterische Stabilisierung der Pigmente und Füllstoffe, die aminischen Mono-, Oligo- oder Polymerketten fördern insbesondere die Benetzung der Pigmente und Füllstoffe, die auch als pigmentaffine Gruppen bezeichnet werden. Durch eine spezielle Reaktionsführung in Anwesenheit von Epoxiden können die einpolymerisierten, aminischen Monomere wie API oder DMAPA in quartarnäre Ammoniumverbindungen überführt werden. Man erhält so kationische Dispergatoren, die bei einigen Pigmenten im Hinblick auf Benetzung, Viskositätssenkung, Stabilität und Farbausbeute deutliche Vorteile bringen können.

Kammpolymere können nach den üblichen Methoden der präparativen organischen Chemie hergestellt werden. Dazu legt man beispielsweise das SMA- Copolymer oder das Styrolacrylat- Festharz in Solventien gelöst vor und gibt die aminischen Mono-, Oligo- oder Polymerketten hinzu und lässt sie durch eine Pfropfcopolymerisation mit den reaktiven Malein- bzw. Acrylsäuregruppen der Hauptkette bei Temperaturen zwischen 50 und 180°C reagieren. Nach der Reaktion können die Solventien abdestilliert werden, so daß ein 100%iger, wasserfreier und flüssiger Dispergator entsteht. Die Viskosität des Dispergators kann durch die Zugabe von weiteren niedrigviskosen Polymeren eingestellt werden. Die Auswahl der niedrigviskosen Polymere sollte nicht nur nach viskositätsreduzierenden Geschichtspunkten, sondern auch im Hinblick auf die Förderung der benetzenden Eigenschaften für die Pigmentdispergierung und die Steigerung der Verträglichkeit in Farben und Lacken erfolgen. Insbesondere die Stoffgruppe der Sulfonamide hat sich hier bewährt.

### Pigmentpasten

In einer ersten bevorzugten Ausführungsform sind Pastenzusammensetzungen bevorzugt, die
(a) etwa 5 bis etwa 80 Gew.-%, vorzugsweise etwa 10 bis etwa 75 Gew.-% und insbesondere etwa 25 bis etwa 60 Gew.-% Farbpigmente und/oder Füllstoffe und
(b) etwa 20 bis etwa 95 Gew.-%, vorzugsweise etwa 25 bis etwa 90 Gew.-% und insbesondere etwa 40 bis etwa 75 Gew.-% alkoxylierte Carbonsäuren und/oder alkoxylierte Alkohole und/oder Poloxamere
mit der Maßgabe enthalten, dass sich die Mengen gegebenenfalls mit weiteren Zusatzstoffen zu 100 Gew.-% ergänzen.

Eine zweite Ausführungsform bevorzugt Pastenzusammensetzungen, die
(a) etwa 5 bis etwa 80 Gew.-%, vorzugsweise etwa 10 bis etwa 75 Gew.-% und insbesondere etwa 25 bis etwa 60 Gew.-% Farbpigmente und/oder Füllstoffe;
(b) etwa 20 bis etwa 90 Gew.-%, vorzugsweise etwa 25 bis 80 Gew.-% und insbesondere etwa 40 bis 75 Gew.-% alkoxylierte Carbonsäuren und/oder alkoxylierte Alkohole und/oder Poloxamere sowie
(c) etwa 1 bis etwa 7 Gew.-%, vorzugsweise etwa 2 bis etwa 5 Gew.-% Dispergatoren
mit der Maßgabe enthalten, dass sich die Mengen gegebenenfalls mit weiteren Zusatzstoffen zu 100 Gew.-% ergänzen.

Zur Vermeidung von Unklarheiten sei darauf hingewiesen, dass Zubereitungen, die aus den angegebenen Mengenbereichen abgeleitet werden können, aber sich nicht zu 100 Gew.-% ergänzen oder über 100 Gew.-% hinausgehen, nicht von der Erfindung umfasst sind. Innerhalb der angegebenen Bereiche kann der Fachmann passende Zusammensetzungen finden, die sich zu 10 Gew.-% ergänzen und die technische Lehre erfüllen, ohne dazu erfinderisch tätig werden zu müssen.

Vorzugsweise sind die erfindungsgemäßen Pastenzusammensetzungen wasserfrei; sie können jedoch in Summe einen Wassergehalt von maximal 2 Gew.-% und vorzugsweise maximal 1 Gew.-% aufweisen, falls die verwendeten Farbpigmente und Füllstoffe, wie auch die Alkoxylate und Dispergatoren über einen Restwassergehalt verfügen.

Die erfindungsgemäßen Pastenzusammensetzungen genügen den Anforderungen des RAL ZU 102 "Blauer Engel" an Tönprodukte. Hierzu gehören beispielsweise die Freiheit von Bioziden, so-wie Weichmachern, SVHC- Stoffe und wassergefährdende Substanzen.. Sie erfüllen zudem die Anforderungen zur Einstufung in die Wassergefährdungsklasse (WGK) 1.

Die Pastenzusammensetzungen zeichnen sich ferner dadurch aus, dass sie eine Viskosität (Platte/Platte, 20 °C) von weniger als 1.000 mPas bei einem Schergefälle von 500 1/s sowie weniger als 20000 mPas bei 1 1/s aufweisen.

### GEWERBLICHE ANWENDBARKEIT

Ein weiterer Gegenstand der Erfindung betrifft ein Verfahren zur Herstellung von wasser- und lösungsmittelfreien Pastenzusammensetzungen, umfassend oder bestehend aus den folgenden Schritten:
(a) Bereitstellen mindestens eines anorganischen oder organischen Pigmentes oder eines Füllstoffs;
(b) Bereitstellen mindestens einer alkoxylierten Verbindung, vorzugsweise einer alkoxylierten Carbonsäure oder eines alkoxylierten Alkohols oder eines Poloxamers;
(c) gegebenenfalls Bereitstellen mindestens eines Dispergators; und
(d) Homogenisieren und Dispergieren der Komponenten (a), (b) und gegebenenfalls (c).

Ferner umfasst die vorliegende Erfindung die Verwendung von alkoxylierten Carbonsäuren und/oder Alkoholen und/oder Poloxameren gegebenenfalls zusammen mit Dispergatoren als Additive zur Herstellung von wasser- und lösungsmittelfreien Pigmentpasten.

Vorzugsweise stellt die alkoxylierte Carbonsäure ein Addukt einer ungesättigten Carbonsäure mit 16 bis 22 Kohlenstoffatomen mit 0 bis 10 Mol Propylenoxyid und/oder 2 bis 15 Mol Ethylenoxid - in Block- oder Random-Verteilung - dar.

Der alkoxylierte Alkohol stellt vorzugsweise ein Addukt von Ethylenoxid und/oder Propylenoxid an Butanol, Butyldiglykol und/oder Butyltriglykol mit einer mittleren molaren Masse von 900 bis 1200 g/mol und einem Verhältnis EO/PO von 1:1 bis 2:1 als Random- Verteilung dar.

Das Poloxamer weist vorzugsweise Molekulargewichte von etwa 5.000 bis etwa 20.000 auf.

Soweit es das beanspruchte Verfahren und die beanspruchte Verwendung angeht, gelten alle weiter oben genannten bevorzugten Ausführungsformen, Mischungen, Verhältnisse und dergleichen *mutatis-mutandis,* ohne dass es dazu einer Wiederholung bedarf.

### BEISPIELE

### BEISPIELE 1 BIS 6, VERGLEICHSBEISPIEL V1, V2

### Wasserfreie Titandioxidpasten

Titandioxid wurde unter starker Scherung in verschiedene flüssige Alkoxylat/Dispergatormischungen eingearbeitet, so dass Pigmentpasten mit einer TiO₂-Konzentration von 70 Gew.-% erhalten wurden. Die Viskosität der Pasten wurde mit Scherraten von 1, 10, 100 und 500 reziproken Sekunden bestimmt.¹ Die Ergebnisse sind in **Tabelle 1** zusammengefasst.

**Tabelle 1**

| Viskosität 70 Gew.-%iger TiO₂-Pasten (* = Viskosität > 100.000 mPas) | | | | | | | | |
|---|---|---|---|---|---|---|---|---|
| **Zusammensetzung** | **1** | **2** | **3** | **V1** | **V2** | **4** | **5** | **6** |
| Ölsäure+1PO/10EO (Random) | 30,0 | 28,0 | 28,0 | - | - | | | |
| C₁₂-Fettalkohol+PO+EO | | | | 30,0 | 28,0 | | | |
| Butanol+PO/EO (1:1, Random, M_{w} ≈ 1000 g/mol)) | - | - | | | | 30.0 | 28,0 | 28,0 |
| Diethylamin+PO+EO | - | 2,0 | | 2,0 | - | | 2,0 | - |
| SMA/Sulfonamin/API | - | - | 2,0 | - | 2,0 | | - | 2,0 |
| Kronos 2310 TiO2 Pigment | 70,0 | 70,0 | 70,0 | 70,0 | 70,0 | 70.0 | 70,0 | 70,0 |
| Summe | 100,0 | 100,0 | 100,0 | 100,0 | 100,0 | 100,0 | 100,0 | 100,0 |

| ***Viskosität [mPas]*** | | | | | | | | |
|---|---|---|---|---|---|---|---|---|
| 1/s | 61890 | 3459 | 1272 | n.m. | n.m. | * | 100800 | 1507 |
| 10/s | 8526 | 990 | 786 | n.m. | n.m. | 29780 | 11650 | 1305 |
| 100/s | 1718 | 755 | 827 | n.m. | n.m. | 4740 | 2637 | 1399 |
| 500/s | 830 | 855 | 916 | n.m. | n.m. | 3679 | 2494 | 1721 |

| | | | | | | | | |
|---|---|---|---|---|---|---|---|---|
| n.m. = nicht messbar ¹ Gerät: HAAKE MARS III; Platte/Platte mit 35mm Durchmesser (P35 Ti L), d= 0.300mm, T= 20°C ±0.1, CR von 0.1 - 1000 1/s, anschließend CR von 1000 - 0.1 1/s mit Aufnahme der Messwerte auf der Rückkurve | | | | | | | | |

Die Beispiele und Vergleichsbeispiele zeigen, dass schon die alkoxylierte Ölsäure bzw. der alkoxylierte Alkohol alleine eine deutliche Verminderung der Pastenviskosität bewirkt und dieser Effekt durch Zugabe von aminischen Dispergatoren deutlich verstärkt wird. Insbesondere führen die Kombinationen aus alkoxylierter Ölsäure bzw. Alkohol und aminischen Dispergatoren zu einer schnelleren Abnahme der Viskosität als der Zusatz der alkoxylierten Ölsäure bzw. des alkoxylierten Alkohols alleine.

### BEISPIELE 5 BIS 10, VERGLEICHSBEISPIEL V3. V4

### Wasserfreie Pigmentpasten

Ein organisches Rotpigment wurde unter starker Scherung in verschiedene Alkoxylat/Dispergatormischungen eingearbeitet, so dass Pasten mit einer Pigmentkonzentration von 25 Gew.-% erhalten wurden. Die Viskosität der Pasten wurde mit Scherraten von 1, 10, 100 und 500 s⁻¹, wie bereits angegeben, bestimmt. Die Ergebnisse sind in **Tabelle 2** zusammengefasst.

**Tabelle 2**

| Viskosität 25 Gew.-%iger Pigmentpasten (* = Viskosität > 10.000.000 mPas) | | | | | | | | |
|---|---|---|---|---|---|---|---|---|
| **Zusammensetzung** | **7** | **8** | **9** | **V3** | **V4** | **10** | **11** | **12** |
| Ölsäure+1PO/10EO (Random) | 75,0 | 71,0 | 71,0 | | | - | - | - |
| C₁₂-Fettalkohol+PO+EO | - | - | | 75,0 | 71,0 | - | - | - |
| Butanol+PO/EO (1:1, Random, M_{w} ≈ 1000 g/mol)) | - | - | - | - | - | 75,0 | 71,0 | 71,0 |
| Diethylamin+PO+EO | - | 4,0 | - | | - | | 4,0 | |
| SMA/Sulfonamin/API | - | - | 4,0 | - | 4,0 | | | 4,0 |
| Cinilex DPP Red SR2P Rotpigment PR254 | 25,0 | 25,0 | 25,0 | 25,0 | 25,0 | 25,0 | 25,0 | 25,0 |
| Summe | 100,0 | 100,0 | 100,0 | 100,0 | 100,0 | 100,0 | 100,0 | 100,0 |

| ***Viskosität [mPas]*** | | | | | | | | |
|---|---|---|---|---|---|---|---|---|
| 1/s | * | 17920 | 244 | * | 1144 | 14380 | 12440 | 425 |
| 10/s | 8426 | 3005 | 224 | 4459 | 1054 | 2621 | 2304 | 386 |
| 100/s | 1768 | 806 | 218 | 1780 | 987 | 817 | 752 | 379 |
| 500/s | 848 | 491 | 218 | 1317 | 932 | 536 | 506 | 385 |

Auch hier zeigen die Beispiele und Vergleichsbeispiele, dass schon die alkoxylierte Ölsäure bzw. die alkoxylierten Alkohole alleine eine deutliche Verminderung der Pastenviskosität bewirkt und dieser Effekt durch Zugabe von aminischen Dispergatoren signifikant verstärkt wird. Insbesondere führt die Kombination aus alkoxylierter Ölsäure bzw. Alkohol und aminischem Dispergator zu einer schnelleren Abnahme der Viskosität als der Zusatz der alkoxylierten Ölsäure bzw. des alkoxylierten Alkohols alleine.

### BEISPIELE 13 BIS 18

### Wasserfreie Pigmentpasten

Ein organisches Grünpigment wurde unter starker Scherung in verschiedene flüssige Dispergiermittel eingearbeitet, so dass Pasten mit einer Pigmentkonzentration von 15 Gew.-% erhalten wurden. Die Viskosität der Pasten wurde mit Scherraten von 1, 10, 100 und 500 reziproken Sekunden wie bereits angegeben bestimmt. Die Ergebnisse sind in **Tabelle 3** zusammengefasst.

**Tabelle 3**

| Viskosität 15 Gew.-%iger Pigmentpasten | | | | | | |
|---|---|---|---|---|---|---|
| **Zusammensetzung** | **13** | **14** | **15** | **16** | **17** | **18** |
| Ölsäure+1PO/10EO (Random) | 75,0 | 71,0 | 71,0 | - | - | - |
| C₁₂-Fettalkohol+PO+EO | - | - | - | 75,0 | 71,0 | 71,0 |
| Butanol+PO/EO (1:1, Random, M_{w} ≈ 1000 g/mol)) | - | 4,0 | - | - | 4,0 | |
| Diethylamin+PO+EO | - | - | 4,0 | - | | 4,0 |
| Heliogen Green L 8735 Organisches Grünpigment PG7 | 15,0 | 15,0 | 15,0 | 15,0 | 15,0 | 15,0 |
| Summe | 100,0 | 100,0 | 100,0 | 100,0 | 100,0 | 100,0 |

| ***Viskosität [mPas]*** | | | | | | |
|---|---|---|---|---|---|---|
| 1/s | 18040 | 9527 | 13270 | 2014 | 1727 | 3434 |
| 10/s | 2715 | 1715 | 2050 | 954 | 918 | 1158 |
| 100/s | 658 | 471 | 526 | 534 | 527 | 504 |
| 500/s | 349 | 257 | 292 | 357 | 352 | 349 |

Auch in diesem Beispiel zeigt sich, dass schon die alkoxylierte Ölsäure bzw. der alkoxylierte Alkohol alleine eine deutliche Verminderung der Pastenviskosität bewirkt. Dieser Effekt kann wiederum durch Zugabe von aminischen Dispergatoren signifikant gesteigert werden. In diesen Beispielen reicht die Viskositätserniedrigung des reinen alkoxylierten Alkohols bzw. der reinen alkoxylierten Ölsäure zu so geringen Viskositäten, dass diese Pasten im Point-of-Sale auf Dosiermaschinen problemlos eingesetzt werden könnten.

## Patentansprüche

1. Pastenzusammensetzungen, enthaltend und/oder bestehend aus
(a) mindestens einem Farbpigment und/oder einem Füllstoff,
(b) mindestens einer alkoxylierten Verbindung, nämlich
(b1) einer alkoxylierten Carbonsäure und/oder
(b2) einem alkoxylierten Alkohol und/oder
(b3) einem Poloxamer,
und gegebenenfalls
(c) mindestens einem Dispergator.

2. Pastenzusammensetzungen nach Anspruch 1, **dadurch gekennzeichnet, dass** sie anorganische und/oder organische Farbpigmente und/oder Füllstoffe enthalten.

3. Pastenzusammensetzungen nach den Ansprüchen 1 und/oder 2, **dadurch gekennzeichnet, dass** sie alkoxylierte Carbonsäuren der Formel (I) enthalten,
R¹CO(AO)ₙOH (I)
in der
R¹ für ein lineares oder verzweigtes, gegebenenfalls hydroxysubstituiertes Acylradikal mit bis zu 3 Doppelbindungen,
AO für eine Ethylenglykol-, Propylenglykol oder eine Mischung von Ethylenglykol- und Propylenglykol-Einheiten in Block- oder Random-Abfolge, und
n für ganze Zahlen von 1 bis 25
steht.

4. Pastenzusammensetzungen nach den Ansprüchen 1 und/oder 2, **dadurch gekennzeichnet, dass** sie alkoxylierte Alkohole der Formel (II) enthalten,
R²(AO)ₘOH (II)
in der
R² für ein lineares oder verzweigtes Kohlenwasserstoffradikal mit 1 bis 22 Kohlenstoffatomen, das bis zu 3 Doppelbindungen besitzen kann,
AO für eine Ethylenglykol- oder Propylenglykol-Einheit oder eine Mischung von Ethylenglykol- und Propylenglykol-Einheiten in Block- oder Random-Abfolge, und
m für ganze Zahlen von 1 bis 30
steht.

5. Pastenzusammensetzungen nach den Ansprüchen 1 und/oder 2, **dadurch gekennzeichnet, dass** sie Poloxamere enthalten, die der Formel (III) folgen 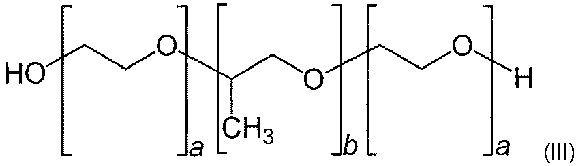 in der a und b für Zahlen von etwa 100 bis etwa 500 stehen.

6. Pastenzusammensetzungen nach mindestens einem der Ansprüche 1 bis 4, **dadurch gekennzeichnet, dass** sie als Dispergatoren Aminverbindungen der Formel (IV) 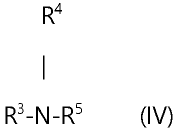 enthalten, in der
R³ für -(CHY)ₓ(NH)_{y}(CHY)_{z}A,
x und y jeweils für ganze Zahlen von 1 bis 10, vorzugsweise 1 bis 5,
y für 0 oder 1,
Y für Wasserstoff oder eine Alkylgruppe mit 1 bis 4 Kohlenstoffatomen,
A für Wasserstoff, eine Hydroxylgruppe, eine Aminogruppe oder eine (OCH₂CHY)p-Gruppe
P für ganze Zahlen von 1 bis 10 und
R⁴ und R⁵ unabhängig voneinander für Wasserstoff oder R¹
stehen.

7. Pastenzusammensetzungen nach mindestens einem der Ansprüche 1 bis 3, **dadurch gekennzeichnet, dass** sie Aminverbindungen enthalten, die ausgewählt sind aus der Gruppe, die gebildet wird von Anlagerungsprodukte von 1 bis 25Mol Ethylenoxid und/oder Propylenoxid (in Random- oder Blockverteilung) an Methylamin, Dimethylamin, Trimethylamin, Ethylamin, Diethylamin, Triethylamin, Propylamin, Dipropylamin, Tripropylamin, Butylamin, Dibutylamin, Tributylamin, Methylethylamin, Methyldiethylamin, Dimethylethylamin, Diethylenamin, Dipropylenamin, Ethanolamin, Diethanolamin, Triethanolamin und deren Mischungen.

8. Pastenzusammensetzungen nach mindestens einem der Ansprüche 1 bis 6, **dadurch gekennzeichnet, dass** sie
(a) etwa 5 bis etwa 80 Gew.-% Farbpigmente und/oder Füllstoffe und
(b) etwa 20 bis etwa 95 Gew.-% alkoxylierte Carbonsäuren und/oder alkoxylierte Alkohole und/oder Poloxamere
mit der Maßgabe enthalten, dass sich die Mengen gegebenenfalls mit weiteren Zusatzstoffen zu 100 Gew.-% ergänzen.

9. Pastenzusammensetzungen nach mindestens einem der Ansprüche 1 bis 6, **dadurch gekennzeichnet, dass** sie
(a) etwa 5 bis etwa 80 Gew.-% Farbpigmente und/oder Füllstoffe,
(b) etwa 15 bis etwa 90 Gew.-% alkoxylierte Carbonsäuren und/oder alkoxylierte Alkohole und/oder Poloxamere sowie
(c) etwa 1 bis etwa 5 Gew.-% Dispergatoren
mit der Maßgabe enthalten, dass sich die Mengen gegebenenfalls mit weiteren Zusatzstoffen zu 100 Gew.-% ergänzen.

10. Pastenzusammensetzungen nach mindestens einem der Ansprüche 1 bis 11, **dadurch gekennzeichnet, dass** sie bei 20°C eine Platte/Platte-Viskosität bei Messung mit einem Schergefälle von 500 reziproken Sekunden von unter 1.000 mPas aufweisen.

11. Verfahren zur Herstellung von wasser- und lösungsmittelfreien Pastenzusammensetzungen, umfassend oder bestehend aus den folgenden Schritten:
(a) Bereitstellen mindestens eines anorganischen oder organischen Pigmentes und/oder eines Füllstoffs;
(b) Bereitstellen mindestens einer alkoxylierten Verbindung, insbesondere einer alkoxylierten Carbonsäure und/oder eines alkoxylierten Alkohols und/oder eines Poloxamers;
(c) gegebenenfalls Bereitstellen mindestens eines Dispergators; und
(d) Homogenisieren und Dispergieren der Komponenten (a), (b) und gegebenenfalls (c).

12. Verwendung von alkoxylierten Carbonsäuren und/oder Alkoholen und/oder Poloxameren gegebenenfalls zusammen mit Dispergatoren als Additive zur Herstellung von vorzugsweise wasser- und lösungsmittelfreien Pigment- oder Füllstoffpasten.

13. Verwendung nach Anspruch 12, **dadurch gekennzeichnet, dass** die alkoxylierte Carbonsäuren Addukte von 1 bis 3 Mol Propylenoxyid und 2 bis 10 Mol Ethylenoxid - in Block- oder Random-Verteilung - an Ölsäure darstellen

14. Verwendung nach Anspruch 13, **dadurch gekennzeichnet, dass** die alkoxylierten Alkohole Addukte von Ethylenoxid und/oder Propylenoxid an Butanol, Butyldiglykol und/oder Butyltriglykol mit einer mittleren molaren Masse von 900 - 1200 g/mol und einem Verhältnis EO/PO von 1:1 bis 2:1 als Random- Verteilung darstellen.

15. Verwendung nach Anspruch 12, **dadurch gekennzeichnet, dass** die Poloxamere ein Molekulargewicht im Bereich von etwa 5.000 bis etwa 20.000 aufweisen.

## Claims

1. Paste compositions containing and/or consisting of
(a) at least one color pigment and/or a filler,
(b) at least one alkoxylated compound, namely
(b1) an alkoxylated carboxylic acid and/or
(b2) an alkoxylated alcohol and/or
(b3) a poloxamer,
and optionally
(c) at least one dispersant.

2. Paste composition according to claim 1, **characterized in that** they contain organic and/or organic colour pigments and/or fillers.

3. Paste composition according to claims 1 and/or 2, **characterized in that** they contain alkoxylated carboxylic acids of the formula (I)
R¹CO(AO)ₙOH (I)
in which
R¹ is a linear or branched, optionally hydroxy-substituted acyl radical having up to 3 double bonds,
AO is an ethylene glycol, propylene glycol or a mixture of ethylene glycol and propylene glycol units in block or random sequence, and
n is an integer from 1 to 25

4. Paste composition according to claims 1 and/or 2, **characterized in that** they contain alkoxylated alcohols of formula (II)
R²(AO)ₘOH (II)
in which
R² represents a linear or branched hydrocarbon radical with 1 to 22 carbon atoms, which may have up to 3 double bonds,
AO represents an ethylene glycol or propylene glycol unit or a mixture of ethylene glycol and propylene glycol units in block or random sequence, and
m is an integer from 1 to 30

5. Paste compositions according to claims 1 and/or 2, **characterized in that** they contain poloxamers following formula (III) 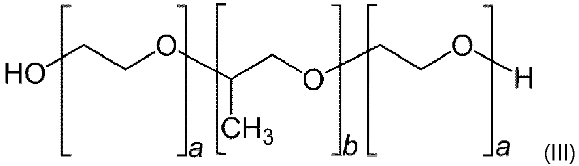 in which a and b represent numbers from about 100 to about 500.

6. Paste compositions according to at least one of claims 1 to 4, **characterized in that** they contain, as dispersants, amine compounds of formula (IV) 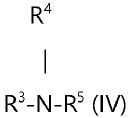 in which
R³ stands for -(CHY)ₓ(NH)_{y}(CHY)_{z}A,
x and y each represent integers from 1 to 10, preferably 1 to 5,
y for 0 or 1,
Y is hydrogen or an alkyl group with 1 to 4 carbon atoms,
A is hydrogen, a hydroxyl group, an amino group or an (OCH₂CHY)ₚ group
p represents integers from 1 to 10 and
R⁴ and R⁵ independently of one another represent hydrogen or R¹
independently of one another.

7. Paste compositions according to at least one of claims 1 to 3, **characterized in that** they contain amine compounds selected from the group formed by addition products of 1 to 25 moles of ethylene oxide and/or propylene oxide (in random or block distribution) to methylamine, dimethylamin, trimethylamine, ethylamine, diethylamine, triethylamine, propylamine, dipropylamine, tripropylamine, butylamine, dibutylamine, tributylamine, methyl ethylamine, methyldiethylamin, dimethylethylamine, diethyleneamine, dipropyleneamine, ethanolamine, diethanolamine, triethanolamine and mixtures thereof.

8. Paste compositions according to at least one of claims 1 to 6, **characterized in that** they contain
(a) about 5 to about 80% by weight of color pigments and/or fillers and
(b) about 20 to about 95% by weight of alkoxylated carboxylic acids and/or alkoxylated alcohols and/or poloxamers
with the proviso that the quantities may be supplemented to 100% by weight with further additives.

9. Paste compositions according to at least one of claims 1 to 6, **characterized in that** they contain
(a) about 5 to about 80% by weight of color pigments and/or fillers,
(b) about 15 to about 90% by weight of alkoxylated carboxylic acids and/or alkoxylated alcohols and/or poloxamers, and
(c) about 1 to about 5% by weight of dispersants
with the proviso that the quantities may be supplemented to 100% by weight with further additives.

10. Paste compositions according to at least one of claims 1 to 11, **characterized in that** they have a plate/plate viscosity of less than 1,000 mPas at 20°C when measured with a shear rate of 500 reciprocal seconds.

11. A process for the preparation of water- and solvent-free paste compositions, comprising or consisting of the following steps:
(a) providing at least one inorganic or organic pigment and/or filler;
(b) providing at least one alkoxylated compound, in particular an alkoxylated carboxylic acid and/or an alkoxylated alcohol and/or a po-loxamer;
(c) optionally providing at least one dispersant; and
(d) homogenizing and dispersing components (a), (b) and optionally (c).

12. The use of alkoxylated carboxylic acids and/or alcohols and/or poloxamers, optionally together with dispersants, as additives for the production of preferably water- and solvent-free pigment or filler pastes.

13. The use according to claim 12, **characterized in that** the alkoxylated carbonic acids are adducts of 1 to 3 mol of propylene oxide and 2 to 10 mol of ethylene oxide - in block or random distribution - with oleic acid

14. The use according to claim 13, **characterized in that** the alkoxylated alcohols are adducts of ethylene oxide and/or propylene oxide on butanol, butyl diglycol and/or butyl triglycol with an average molar mass of 900 - 1200 g/mol and an EO/PO ratio of 1:1 to 2:1 as a random distribution.

15. The use according to claim 12, **characterized in that** the poloxamers have a molecular weight in the range from about 5,000 to about 20,000.

## Revendications

1. Compositions de pâte contenant et/ou constituées de
(a) au moins un pigment coloré et/ou une charge,
(b) d'au moins un composé alcoxylé, à savoir
(b1) un acide carboxylique alcoxylé et/ou
(b2) un alcool alcoxylé et/ou
(b3) un poloxamère,
et éventuellement
(c) au moins un agent dispersant.

2. Compositions pâteuses selon la revendication 1, **caractérisées en ce qu'**elles contiennent des pigments colorés anorganiques et/ou organiques et/ou des charges.

3. Compositions de pâte selon les revendications 1 et/ou 2, **caractérisées en ce qu'**elles contiennent des acides carboxyliques alcoxylés de formule (I),
R¹CO(AO)ₙOH (I)
dans laquelle
R¹ représente un radical acyle linéaire ou ramifié, éventuellement hydroxy-substitué, comportant jusqu'à 3 doubles liaisons,
glycol et propylène glycol en séquence séquencée ou aléatoire, et
n représente des nombres entiers de 1 à 25
représente un nombre entier.

4. Compositions de pâte selon les revendications 1 et/ou 2, **caractérisées en ce qu'**elles contiennent des alcools alcoxylés de formule (II),
R²(AO)ₘOH (II)
dans laquelle
R² représente un radical hydrocarboné linéaire ou ramifié comportant de 1 à 22 atomes de carbone et pouvant comporter jusqu'à 3 doubles liaisons,
AO représente une unité d'éthylène glycol ou de propylène glycol ou un mélange d'unités d'éthylène glycol et de propylène glycol en séquence séquentielle ou aléatoire, et
m représente des nombres entiers de 1 à 30
représente un nombre entier.

5. Compositions pâteuses selon les revendications 1 et/ou 2, **caractérisées en ce qu'**elles contiennent des poloxamères répondant à la formule (III) 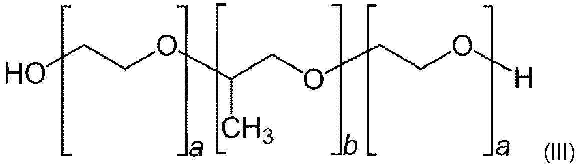 dans laquelle a et b représentent des nombres allant d'environ 100 à environ 500.

6. Compositions pâteuses selon au moins l'une des revendications 1 à 4, **caractérisées en ce qu'**elles contiennent comme dispersants des composés aminés de formule (IV) 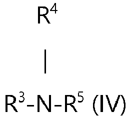 dans laquelle
R³ représente -(CHY)ₓ(NH)_{y}(CHY)_{z}A,
x et y représentent chacun des nombres entiers de 1 à 10, de préférence de 1 à 5,
y représente 0 ou 1,
Y représente un atome d'hydrogène ou un groupe alkyle ayant de 1 à 4 atomes de carbone,
A représente un atome d'hydrogène, un groupe hydroxyle, un groupe amino ou un groupe (OCH₂CHY)ₚ
p représente des nombres entiers de 1 à 10 et
R⁴ et R⁵ représentent indépendamment l'un de l'autre l'hydrogène ou R¹
représentent un atome d'hydrogène.

7. Compositions pâteuses selon au moins l'une des revendications 1 à 3, **caractérisées en ce qu'**elles contiennent des composés aminés choisis dans le groupe formé par les produits d'addition de 1 à 25 moles d'oxyde d'éthylène et/ou d'oxyde de propylène (en répartition aléatoire ou en bloc) sur la méthylamine, diméthylamin, triméthylamine, éthylamine, diéthylamine, triéthylamine, propylamine, dipropylamine, tripropylamine, butylamine, dibutylamine, tributylamine, méthyléthylamine, méthyldiéthylamin, diméthyléthylamine, diéthylèneamine, dipropylèneamine, éthanolamine, diéthanolamine, triéthanolamine et leurs mélanges.

8. Compositions pâteuses selon au moins l'une des revendications 1 à 6, **caractérisées en ce qu'**elles contiennent
(a) d'environ 5 à environ 80 % en poids de pigments colorés et/ou de charges, et
(b) d'environ 20 à environ 95 % en poids d'acides carboxyliques alcoxylés et/ou d'alcools alcoxylés et/ou de poloxamères
étant entendu que les quantités se complètent éventuellement à 100 % en poids avec d'autres additifs.

9. Compositions pâteuses selon l'une au moins des revendications 1 à 6, **caractérisées en ce qu'**elles comprennent
(a) environ 5 à environ 80 % en poids de pigments colorés et/ou de charges,
(b) d'environ 15 à environ 90 % en poids d'acides carboxyliques alcoxylés et/ou d'alcools alcoxylés et/ou de poloxamères, et
(c) environ 1 à environ 5 % en poids de dispersants
étant entendu que les quantités se complètent éventuellement à 100 % en poids avec d'autres additifs.

10. Compositions pâteuses selon au moins l'une des revendications 1 à 11, **caractérisées en ce qu'**elles présentent une viscosité plaque/plaque à 20°C, mesurée avec un gradient de cisaillement de 500 secondes réciproques, inférieure à 1000 mPas.

11. Procédé de préparation de compositions pâteuses exemptes d'eau et de solvants, comprenant ou consistant en les étapes suivantes :
(a) mise à disposition d'au moins un pigment inorganique ou organique et/ou d'une charge ;
(b) mise à disposition d'au moins un composé alcoxylé, en particulier un acide carboxylique alcoxylé et/ou un alcool alcoxylé et/ou un poloxamère ;
(c) éventuellement, fournir au moins un dispersant ; et
(d) homogénéiser et disperser les composants (a), (b) et éventuellement (c).

12. Utilisation d'acides carboxyliques et/ou d'alcools et/ou de poloxamères alcoxylés, éventuellement avec des dispersants, comme additifs pour la préparation de pâtes de pigments ou de charges, de préférence exemptes d'eau et de solvants.

13. Utilisation selon la revendication 12, **caractérisée en ce que** les acides carboxyliques alcoxylés représentent des produits d'addition de 1 à 3 moles d'oxydes de propylène et de 2 à 10 moles d'oxyde d'éthylène - en répartition séquentielle ou aléatoire - sur l'acide oléique.

14. Utilisation selon la revendication 13, **caractérisée en ce que** les alcools alcoxylés représentent des produits d'addition d'oxyde d'éthylène et/ou d'oxyde de propylène sur le butanol, le butyldiglycol et/ou le butyltriglycol avec une masse molaire moyenne de 900 à 1200 g/mol et un rapport EO/PO de 1:1 à 2:1 en répartition aléatoire.

15. Utilisation selon la revendication 12, **caractérisée en ce que** les poloxamères présentent un poids moléculaire dans la plage d'environ 5000 à environ 20000.
